# EUROPEAN PATENT SPECIFICATION

(11) **EP 1 050 687 B1**
(45) Date of publication and mention of the grant of the patent: **16.10.2002**
(21) Application number: 99400646.8
(22) Date of filing: 16.03.1999
(51) Int. Cl.: F16B 2/06

(54) **Safety line anchorage assemblies**
Verankerungsvorrichtung für Rettungsseil
Système d'ancrage pour câble de sûreté

(43) Date of publication of application: 08.11.2000
(73) Proprietor: PROTECTA INTERNATIONAL, 06511 Carros (FR)
(72) Inventor: Ador, Bernard, 06330 Roquefort les Pins (FR)
(74) Representative: Desaix, Anne

(56) References cited:
- FR-A- 591 856
- FR-A- 2 253 455
- GB-A- 751 364
- US-A- 2 906 551
- US-A- 4 032 245

## Description

The present invention relates to assemblies for providing an anchorage between two members, such as a safety line and a support structure.

Various occupations place people in precarious positions at relatively dangerous heights, thereby creating a need for fall-arresting safety apparatus. Such apparatus typically require a reliable safety line and reliable connections to both the support structure and persons working in proximity to the support structure.

US-A-2,906,551 discloses a clamping device comprising two cylindrically curved brackets adapted to engage a tubular vertical upright member and interconnected by bolts with nuts threaded onto said bolts, the said bolts being U-shaped for supporting horizontal channel members which are carried by at least two said upright members. Such a clamping device does not permit to anchor a safety line to a variety of structural members in a variety of installation environments.

An object of the present invention is to provide an improved anchorage suitable for supporting a safety line in a variety of installation environments and/or relative to a variety of structural members.

To solve this problem, the invention provides an anchorage assembly as recited in claim 1 or in claim 2.

The present invention provides assemblies for anchoring a first member to a second member. A preferred embodiment of the present invention includes two brackets, two braces, two bolts, and enough threaded nuts to clamp the brackets and braces relative to a structural member. The components are configured to be assembled in a variety of ways to provide anchorages suitable for mounting on a variety of structural members. Additional features and/or advantages of the present invention may become more apparent from the detailed description which follows.

### Brief Description of the Drawing

With reference to the Figures of the Drawing, wherein like numerals represent like parts and assemblies throughout the several views,
Figure 1 is a perspective view of each type of component in an anchorage kit made in accordance with the principles of the present invention;
Figure 2 is a perspective view of a first anchorage assembly constructed with the components of Figure 1;
Figure 3 is a bottom view of a first bracket included in the anchorage kit of Figure 1;
Figure 4 is a side view of the bracket of Figure 3;
Figure 5 is an end view of the bracket of Figure 3;
Figure 6 is a bottom view of a second bracket included in the anchorage kit of Figure 1;
Figure 7 is a side view of the bracket of Figure 6;
Figure 8 is an end view of the bracket of Figure 6;
Figure 9 shows the first anchorage assembly mounted on a support member having a first profile and is not covered by the claims
Figure 10 shows a second anchorage assembly constructed with the components of Figure 1 and mounted on a support member having a second profile;
Figures 11a-11f show additional support member profiles which are compatible with the anchorage assembly of Figure 10;
Figure 12 shows a third anchorage assembly constructed with the components of Figure 1 and mounted on a support member having another profile;
Figure 13 shows a fourth anchorage assembly constructed with the components of Figure 1 and mounted on a support member having yet another profile;
Figure 14 shows a fifth anchorage assembly constructed with the components of Figure 1 and mounted on a support member have yet another profile;
Figures 15a shows a sixth anchorage assembly constructed with the components of Figure 1 and mounted on a support member having yet another profile;
Figures 15b-15d show additional support member profiles which are compatible with anchorage assemblies similar to that shown in Figure 15a;
Figure 16 shows a seventh anchorage assembly constructed with the components of Figure 1 and mounted on a support member having still another profile; and
Figure 17 is a front view of an anchorage similar to that shown in Figure 10 interconnected between a safety line and a structural member similar to that shown in Figure 11e.

### Detailed Description of the Preferred Embodiment

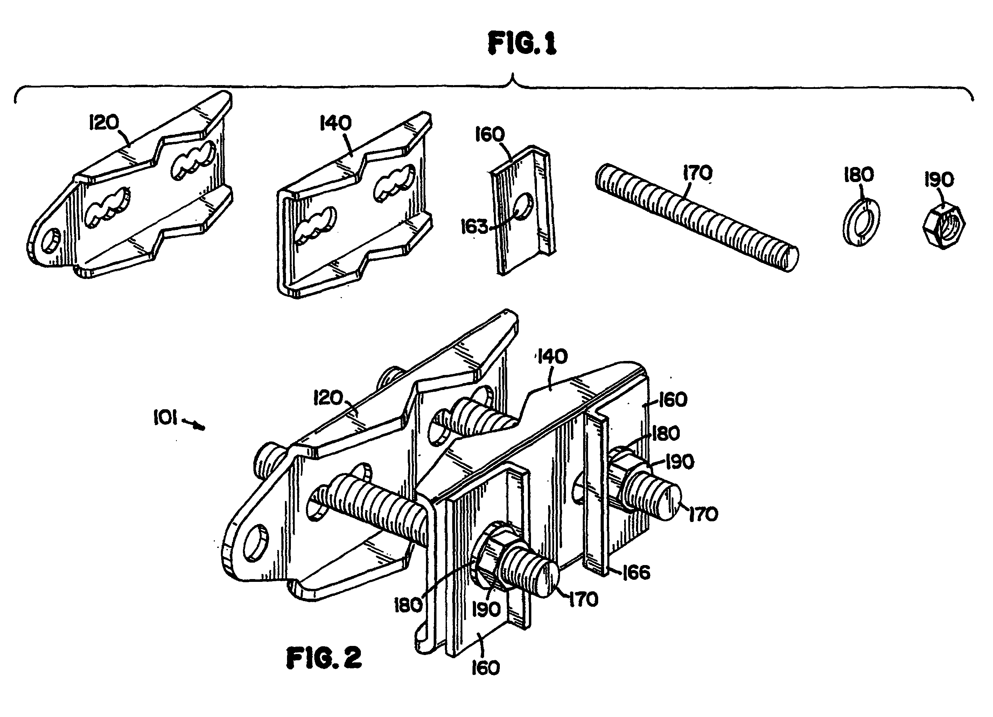

The components of a preferred embodiment anchorage kit made according to the principles of the present invention are collectively designated as 100 in Figure 1. The preferred embodiment kit 100 includes a first bracket 120, a second bracket 140, two braces 160, two threaded bolts 170, six washers 180, and six threaded nuts 190. The components of the kit 100 *may* be assembled in different ways to provide different anchorages.

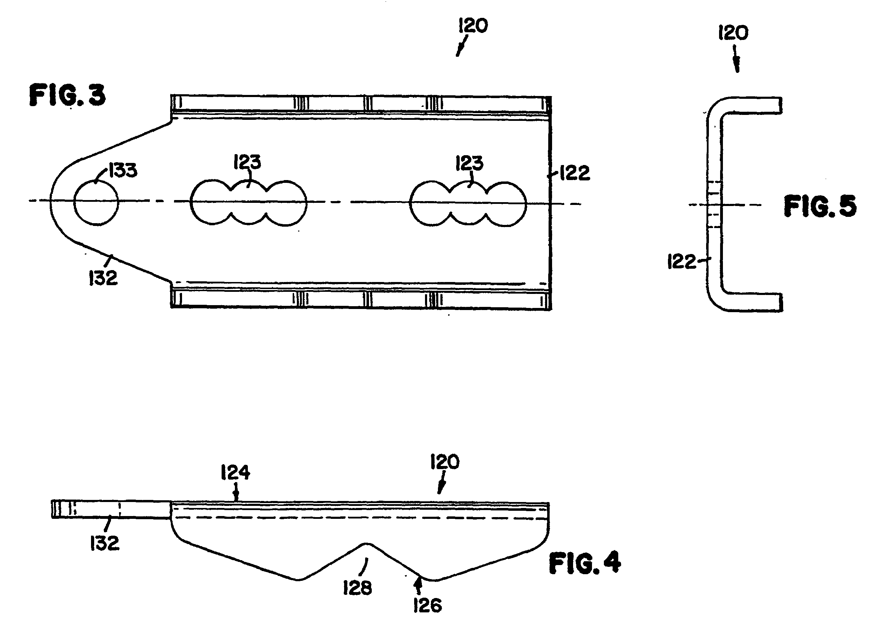

The first bracket 120 is shown alone in Figures 3-5. The first bracket 120 is preferably a steel plate 122 having a U-shaped profile. Openings 123 extend through the base portion of the U-shaped plate 122 to receive respective bolts 170. Each of the openings 123 is sized and configured to support a bolt 170 at three discrete locations relative to the plate 122. An outer side 124 of the base wall provides a flat surface suitable for bearing against a flat surface on a structural member. Each of the side walls of the plate 122 terminates in an edge 126 which faces away from the outer side 124 of the base wall. Each of the side walls is provided with a V-shaped notch 128 which is bounded by converging portions of a respective edge 126, and which defines an angle of approximately one hundred and twenty degrees. The contoured edges 126 are sized and configured to bear against a cylinder or other convex surface on a structural member. The first bracket 120 also includes a tab 132 which is integrally joined to an end of the base wall and extends parallel thereto. A hole 133 extends through the tab 132 to facilitate connection of a safety line to the first bracket 120.

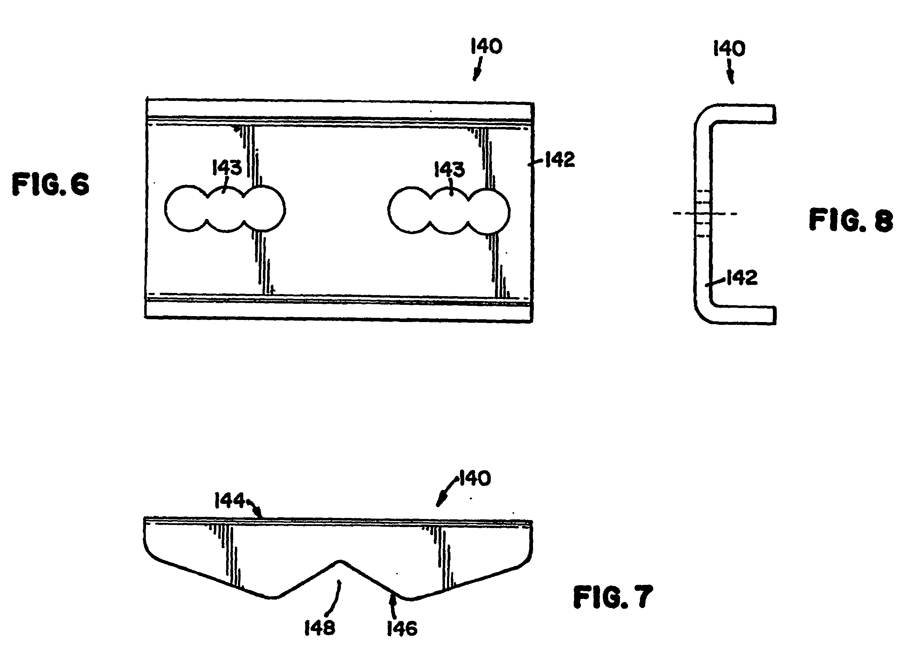

The second bracket 140 is shown alone in Figures 6-8. Except for the absence of tab 132, the second bracket 140 is identical to the first bracket 120. In other words, the second bracket 140 is also preferably a steel plate 142 having a U-shaped profile. Openings 143 extend through the base portion of the U-shaped plate 142 to receive respective bolts 170. Each of the openings 143 is sized and configured to support a bolt 170 at three discrete locations relative to the plate 142. An outer side 144 of the base wall provides a flat surface suitable for bearing against a flat surface on a structural member. Each of the side walls of the plate 142 terminates in an edge 146 which faces away from the outer side 144 of the base wall. Each of the side walls is provided with a V-shaped notch 148 which is bounded by converging portions of a respective edge 146, and which defines an angle of approximately one hundred and twenty degrees. The contoured edges 146 are sized and configured to bear against a cylinder or other convex surface on a structural member.

Each of the braces 160 is preferably a steel plate having an L-shaped profile. A hole 163 extends through the relatively longer segment of each brace 160 to receive a respective bolt 170. An outer side of each longer segment provides a flat surface suitable for bearing against a flat surface on a structural member. The relatively shorter segment of each brace 160 terminates in an edge 166 which faces away from the outer side on a respective longer segment. Depending on the application, the edge 166 may bear against an opposing edge 166 on another brace 160, or against one of the plates 120 or 140, or against a portion of a structural member. Also, depending on the application, the longer segment and the shorter segment may cooperate to cover a corner on a structural member.

Each of the bolts 170 is provided with an external helical thread. Each of the washers 180 is sized and configured to fit onto either of the bolts 170. Each of the nuts 190 is provided with an internal helical thread and is adapted to thread onto either of the bolts 170. Those skilled in the art will recognize that two bolts with heads could be substituted for the two bolts 170 and two of the nuts 190.

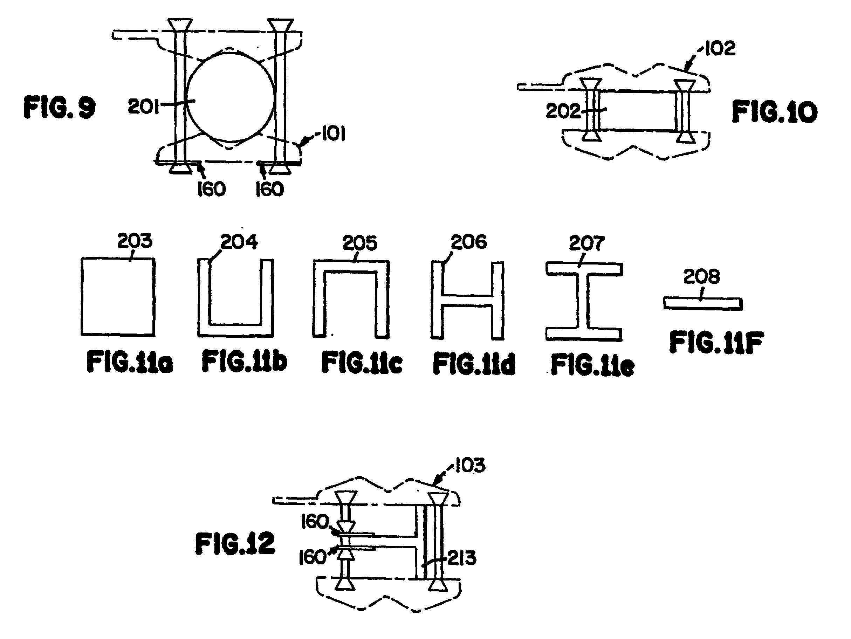

Figure 2 shows the components of the kit 100 (except for two of the washers 180 and two of the nuts 190) assembled into a first anchorage 101. Figure 9 shows this particular anchorage 101 mounted on a structural member 201 having a circular cross-section. The brackets 120 and 140 are arranged so that their respective edges 126 and 146 face toward one another and engage diametrically opposed portions of the structural member 201. The braces 160 are arranged relative to the second bracket 140 so that the longer segments bear against the outer side 144, and the shorter segments are relatively close to one another. The bolts 170 are inserted through aligned holes in the brackets 120 and 140 and the braces 160. After a washer 180 is placed onto each end of each bolt 170, a nut 190 is threaded onto each end of each bolt 170 to mount the anchorage 101 on the structural member 201.

Figure 10 shows the same components of the kit 100 assembled into a second anchorage 102 which is mounted on a structural member 202 having a rectangular cross-section. The brackets 120 and 140 are arranged so that their respective outer sides 124 and 144 face toward one another and engage opposite sides of the structural member 202. The braces 160 may be arranged in a variety of ways, depending on the installation parameters. For example, when the width of the structural member 202 is comparable to the distance between the two openings 123 (and the distance between the two openings 143), then the braces 160 may be arranged like on the previous anchorage 101, but bearing against an opposite, inner side of the base wall on the bracket 140. When the structural member 202 has a relatively smaller width, the braces 160 may be placed onto a single bolt 170, arranged so the longer segments bear against respective outer sides 124 and 144, and further arranged so the shorter segments bear against a common edge of the structural member 202. When the structural member 202 has an even smaller width, the braces 160 may be placed on discrete bolts, arranged so the longer segments bear against respective outer sides 124 and 144, and further arranged so the shorter segments bear against opposite edges of the structural member 202. In any event, the bolts 170, washers 180, nuts 190 are secured in place like on the previous anchorage 101.

Figures 11a-11f show additional structural members 203-208 having discrete cross-sections. The components of the kit 100 may be arranged as described in the preceding paragraph to provide an anchorage suitable for mounting on any of these members 203-208. Again, the arrangement of the braces 160 will vary according to the size and shape of the structural member.

Figure 12 shows all of the components of the kit 100 assembled into a third anchorage 103 which is mounted on a structural member 213 having a "sideways T" cross-section. The brackets 120 and 140 are arranged so that their respective outer sides 124 and 144 face toward one another and engage opposite distal ends of the structural member 213. One of the bolts 170 is secured between the brackets 120 and 140, proximate the opposite distal ends of the structural member 213, by means of washers 180 and nuts 190. The braces 160 are arranged so the relatively longer segments are disposed on opposite sides of the stem portion of the structural member 213, and the relatively shorter segments extend toward one another. The other bolt 170 is inserted through the brackets 120 and 140 and through the braces 160 in such a manner that the two braces 160 are clamped between opposing washers 180 and nuts 190 on an intermediate portion of the second bolt 170. Additional washers 180 and nuts 190 are secured to opposite ends of the second bolt 170.

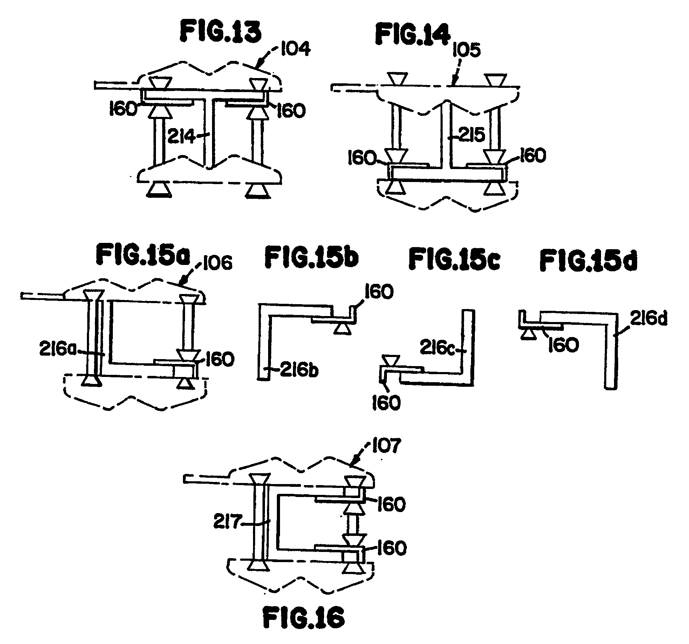

Figure 13 shows all of the components of the kit 100 assembled into a fourth anchorage 104 which is mounted on a structural member 214 having an upright T-shaped cross-section. The bracket 120 is arranged so that its outer side 124 bears against the top surface of the structural member 214, and the bracket 140 is arranged so that it bears against the lower distal end of the structural member 214, with its outer side 144 facing away from the first bracket 120. The braces 160 are disposed at opposite sides of the structural member 214, with the relatively longer segments bearing against respective upper portions of the structural member 214, and the shorter segments extending toward respective portions of the first bracket 120 (beyond the edges of the structural member 214). The bolts 170 are inserted through the brackets 120 and 140 and through respective braces 160 in such a manner that a washer 180 and a nut 190 are secured in place immediately beneath each brace 160.

Figure 14 shows all of the components of the kit 100 assembled into a fifth anchorage 105 which is mounted on a structural member 215 having an inverted T-shaped cross-section. The bracket 120 is arranged so that it bears against the upwardly extending end of the structural member 215, with its outer side 124 facing away from the structural member 215. The bracket 140 is arranged so that its outer side 144 bears against the downwardly facing surface on the structural member 214. The braces 160 are disposed in proximity to the second bracket 140, with the longer segments bearing against the structural member 215, and the shorter segments extending toward respective portions of the second bracket 140. The bolts 170 are inserted through the brackets 120 and 140 and through respective braces 160 in such a manner that a washer 180 and a nut 190 are secured in place immediately above each brace 160.

Figure 15a shows many of the components of the kit 100 assembled into a sixth anchorage 106 which is mounted on a structural member 216a having an L-shaped cross-section. The bracket 120 is arranged so that its outer side 124 bears against an upwardly extending, distal end of the structural member 216a. The bracket 140 is arranged so that its outer side 144 bears against a downwardly facing surface on the structural member 216a. One of the bolts 170 is secured between aligned holes in the brackets 120 and 140, proximate the vertical flange on the structural member 216a, by means of washers 180 and nuts 190. One of the braces 160 is disposed proximate a distal end of the structural member 216a, immediately opposite the second bracket 140, with the longer segment bearing against the structural member 216a, and the shorter segment extending toward the second bracket 140. The other bolt 170 is inserted through the brackets 120 and 140 and the brace 160 in such a manner that a washer 180 and a nut 190 are secured in place immediately above the brace 160. Figures 15b-15d show how the brace 160 on the anchorage 106 may be rearranged to provide anchorages suitable for mounting relative to three other L-shaped structural members 216b-216d.

Figure 16 shows all of the components of the kit 100 assembled into a seventh anchorage 107 which is mounted on a structural member 217 having a "sideways U" cross-section. The brackets 120 and 140 are arranged so that their respective outer sides 124 and 144 face toward one another and bear against opposite sides of the structural member 217. One of the bolts 170 is secured between the brackets 120 and 140, proximate the base of the structural member 217, by means of washers 180 and nuts 190. The braces 160 are disposed at the distal ends of the structural member 217, with the relatively longer segments disposed immediately opposite respective brackets 120 and 140, and with the relatively shorter segments extending across the distal ends and toward respective brackets 120 and 140. The other bolt 170 is inserted through the brackets 120 and 140 and through the braces 160 in such a manner that the two braces 160 are separated by a pair washers 180 and a pair of nuts 190 secured to intermediate portions of the bolt 170.

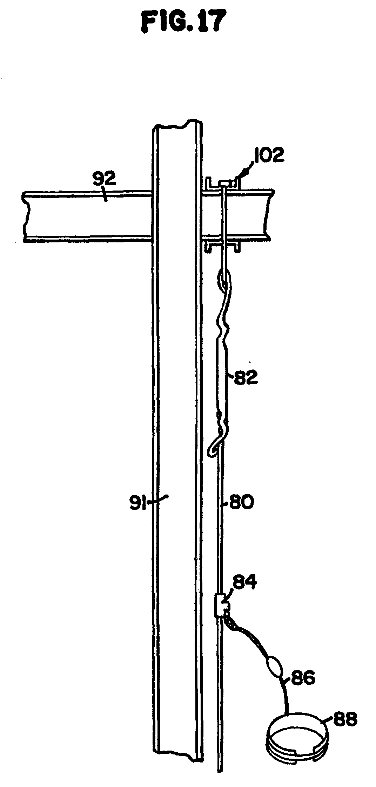

Figure 17 shows one possible application for an anchorage assembled in accordance with the principles of the present invention. In this application, the anchorage 102 is mounted on a horizonal I-beam 92 which is supported by a vertical I-beam 91. A safety line 80 is connected to the anchorage 102, and an energy absorber 82 is connected in series with the safety line 80. A rope grab 84 is movably mounted on the safety line 80, and a lanyard 86 is connected between the rope grab 84 and a person's safety belt 88.

The present invention may be described as an anchorage kit 100 having components which may be combined in various manners to secure a safety line 80 to various types of support structures, including a first support structure 201 having a circular cross section and a second support structure 202 having a rectangular cross section, comprising: a first bracket 120 and a second bracket 140, wherein said first bracket 120 and said second bracket 140 may be aligned so that a first opening 123 in said first bracket 120 aligns with a first opening 143 in said second bracket 140, and a second opening 123 in said first bracket 120 aligns with a second opening 143 in said second bracket 140, and wherein a third opening 133 is formed in at least one of said first bracket 120 and said second bracket 140 to anchor the safety line 80; a first brace 160 and a second brace 160, wherein at least one opening 163 extends through each said brace 160; a first bolt 170 and a second bolt 170, wherein said first bolt 170 is sized and configured to insert through each said first opening 123, 143 and through said at least one opening 163 in said first brace 160, and said second bolt 170 is sized and configured to insert through each said second opening 123, 143 and through said at least one opening 163 in said second brace 160; and at least four threaded nuts 190 sized and configured to thread onto said bolts 170, wherein each said bolt 170 may be secured at each end relative to a respective bracket 120, 140, and each said brace 160 may be secured at an intermediate point along a respective bolt 170. The anchorage kit 100 further comprises a washer 180 for each said threaded nut 190. Each said bolt 170 has opposite threaded ends, and said at least four threaded nuts 190 includes six said nuts 190. At least one said bracket 120 or 140 has a first side 124 or 144 configured to bear against a flat surface, and a second,' opposite side 126 or 146 configured to engage at least four points on a cylindrical surface, and only as many as two of said points is intersected by any given line. Said first bracket 120 has a flat side 124 configured to bear against a flat surface, and said second bracket 140 has a contoured side 146 configured to engage at least four points on a cylindrical surface, and only as many as two of said points is intersected by any given line.

The present invention may also be described as an anchorage assembly 102 interconnected in series between a safety line 80 and a structural member 92, comprising: a first bracket 120 having a first bearing surface 124 which is flat and a second bearing surface 126 which is concave, wherein said first bearing surface 124 and said second bearing surface 126 face in opposite directions; a second bracket 140 having at least one of a bearing surface 144 which is flat and a bearing surface 146 which is concave, wherein an opening 133 extends through at least one of said first bracket 120 and said second bracket 140 to anchor the safety line 80; and at least two bolts 170 interconnected between said first bracket 120 and said second bracket 140, wherein said bolts 170 extend perpendicular to said first bearing surface 124 on said first bracket 120. Said second bracket 140 has a flat bearing surface 144 and a concave bearing surface 146, and said flat bearing surface 144 and said concave bearing surface 146 face in opposite directions. Each said bracket 120, 140 has a U-shaped cross-section.

The anchorage assembly of the foregoing paragraph may be described as further comprising an L-shaped brace 160 defining a hole 163 sized and configured to receive one of said bolts 170, wherein said brace 160 has a relatively longer segment which extends parallel to said first bearing surface 124 on said first bracket 120, and a relatively shorter segment which extends perpendicular to said relatively longer segment, and a flange on the structural member is clamped between said relatively longer segment and one of said first bracket 120 and said second bracket 140. In the alternative, the anchorage assembly of the foregoing paragraph may be described as further comprising two L-shaped braces 160, each of said braces 160 defining a hole 163 sized and configured to receive one of said bolts 170, and each of said braces 160 having a relatively longer segment which extends parallel to said first bearing surface 124 on said first bracket 120, and a relatively shorter segment which extends perpendicularly away from said first bearing surface 124 on said first bracket 120.

The present invention may also be described as an anchorage assembly 102 interconnected in series between a safety line 80 and a structural member 92 having at least one flange which terminates in a distal end, comprising: a first bracket 120 having at least one bearing surface 124 or 126; a second bracket 140 having at least one bearing surface 144 or 146, wherein at least one of said first bracket 120 and said second bracket 140 is configured to anchor the safety line 80; a brace 160 sized and configured to bear against the at least one flange proximate the distal end, wherein said brace 160 is disposed between said first bracket 120 and said second bracket 140; and at least two bolts 170 interconnected between said first bracket 120 and said second bracket 140, wherein said bolts 170 extend perpendicular to said at least one bearing surface 124 or 126, 144 or 146 on each said bracket 120, 140, and at least one of said bolts 170 extends through a hole 163 in said brace 160, and said brace 160 is clamped to said flange by at least one nut 190 threaded onto said at least one of said bolts 170. Said first bracket 120 has a first bearing surface 124 which is flat, and said first bracket has a second bearing surface 126 which is contoured, and said first bearing surface 124 and said second bearing surface 126 face in opposite directions. Said second bracket 140 has a first bearing surface 144 which is flat, and said second bracket 140 has a second bearing surface 146 which is contoured, and said first bearing surface 144 and said second bearing surface 146 on said second bracket 140 face in opposite directions. Each said bracket 120, 140 has a U-shaped cross-section. The anchorage assembly further comprises a second brace 160 sized and configured to bear against the structural member proximate another distal flange end, wherein said second brace 160 is disposed between said first bracket 120 and said second bracket 120, and said second brace 160 is clamped to said structural member by at least one nut 190 threaded onto at least one of said bolts 170.

Although the present invention has been described with reference to a preferred embodiment and a particular application, this disclosure will enable those skilled in the art to recognize additional embodiments and/or applications which fall within the scope of the present invention. For example, the present invention may be used in other systems and/or environments to support lines which may not extend vertically, for example. Thus, the scope of the present invention should be limited only to the extent of the following claims.

## Claims

1. An anchorage assembly for securing a safety line (80) to a structural member (92), the said assembly comprising two brackets (120, 140) interconnected by bolts (170) and nuts (190) threaded onto the bolts, each bracket having a bearing surface adapted to bear against the structural member, **characterized in that** :
- the structural member may have various cross-sections,
- a brace (160) adapted to bear against a part of the structural member is disposed between the brackets (120, 140) and comprises a hole (163) through which one of the said bolts (170) extends,
- the brace (160) is clamped to said part of the structural member (92) by at least one nut (190) threaded onto said one bolt (170),
- said safety line (80) is anchored to one of the brackets.

2. An anchorage assembly for securing a safety line (80) to a structural member (92), the said assembly comprising two brackets (120, 140) interconnected by bolts (170) with nuts (190) threaded onto the bolts, each bracket having a bearing surface adapted to bear against the structural member, **characterized in that** :
- the structural (92) member may have various cross-sections,
- a first one of the said brackets has a flat bearing surface and a concave bearing surface that face in opposite directions,
- the second bracket has at least one bearing surface (144, 146) which is flat or concave,
- said safety line (80) is anchored to one of the brackets (120, 140).

3. The anchorage assembly of claim 1, wherein a first one of the brackets (120) has two bearing surfaces (124, 126) which face in opposite directions, one bearing surface (124) being flat and the other bearing surface (126) being concave, and the bearing surface of the second bracket (140) is flat or concave.

4. The anchorage assembly of claim 2, wherein a brace (160) adapted to bear against a part of the structural member (92) is disposed between the brackets (120, 140) and comprises a hole (163) through which one of said bolts extends, the brace being clamped on said part of the structural member (92) by at least one nut (190) threaded onto said one bolt (170).

5. The anchorage assembly of anyone of claims 1 to 4, wherein said second bracket (140) has a flat bearing surface (144) and a concave bearing surface (146), and said flat bearing surface (144) and said concave bearing surface (146) face in opposite directions.

6. The anchorage assembly of anyone of claims 1 to 5, wherein each said bracket (120, 140) has a U-shaped cross-section.

7. The anchorage assembly of claim 6, wherein the said U-shaped cross section is defined by a base plate and opposite side plates, said base plate defining a flat bearing surface that faces away from said side plates, and said side plates having distal edges which face away from said base plate and define a concave bearing surface ; and wherein said bolts (170) interconnecting said first bracket (120) and said second bracket (140) extend perpendicular to said base plate.

8. The anchorage assembly of anyone of claims 1 to 7, further comprising a second brace (160) sized and configured to bear against the structural member proximate another distal flange end, wherein said second brace (160) is disposed between said first bracket (120) and said second bracket (120), and said second brace (160) is clamped to said structural member by at least one nut (190) threaded onto at least one of said bolts (170).

9. The anchorage assembly of claim 8, wherein the said braces (160) are identical with each other.

10. The anchorage assembly of anyone of claims 1 and 3 to 9, wherein said or each brace (160) has a L-shape and comprises a relatively longer segment which extends parallel to said first bearing surface (124) on said first bracket (120), and a relatively shorter segment which extends perpendicular to said relatively longer segment, and a flange on the structural member is clamped between said relatively longer segment and one of said first bracket (120) and said second bracket (140).

11. The anchorage assembly of anyone of claims 1 to 10, wherein in a first configuration said first bracket (120) and said second bracket (140) define opposing concave bearing surfaces suitable for clamping a circular cross section therebetween.

12. The anchorage assembly of anyone of claims 1 to 11, wherein, in a second configuration, said first bracket (120) and said second bracket (140) define oppposiong flat bearing surfaces suitable for clamping a rectangular cross-section therebetween.

13. The anchorage assembly of anyone of claims 1 to 12, further comprising a washer (180) for each said threaded nut (190).

14. The anchorage assembly of anyone of claims 1 to 13, wherein each said bolt (170) has opposite threaded ends, and said assembly includes six said nuts (190), threaded onto said bolts.

## Patentansprüche

1. Verankerungsbaugruppe zum Sichern einer Sicherheitsleine (80) an einem strukturellen Bauteil (92), wobei die Baugruppe zwei Winkelstücke (120, 140) umfasst, die miteinander mittels Schrauben (170) und auf die Schrauben aufgeschraubte Muttern (190) verbunden sind, wobei jedes Winkelstück eine Lagerfläche besitzt, die ausgestaltet ist, um am strukturellen Bauteil abgestützt zu werden, **dadurch gekennzeichnet, dass**:
- das strukturelle Bauteil unterschiedliche Querschnitte aufweisen kann,
- eine Verstrebung (160), welche ausgestaltet ist, um an einem Teil des strukturellen Bauteils abgestützt zu werden, zwischen den Winkelstücken (120, 140) angeordnet ist und ein Loch (163) umfasst, durch welches sich eine der Schrauben (170) erstreckt,
- die Verstrebung (160) mittels mindestens einer, auf die eine Schraube (170) aufgeschraubten Mutter (190) an das Teil des strukturellen Bauteils (92) geklemmt ist,
- die Sicherheitsleine (80) an einem der Winkelstücke verankert ist.

2. Verankerungsbaugruppe zum Sichern einer Sicherheitsleine (80) an einem strukturellen Bauteil (92), wobei die Baugruppe zwei Winkelstücke (120, 140) umfasst, die miteinander mittels Schrauben (170) und auf die Schrauben aufgeschraubte Muttern (190) verbunden sind, wobei jedes Winkelstück eine Lagerfläche besitzt, die ausgestaltet ist, um am strukturellen Bauteil abgestützt zu werden, **dadurch gekennzeichnet, dass**:
- das strukturelle Bauteil unterschiedliche Querschnitte aufweisen kann,
- ein erstes der beiden Winkelstücke eine flache Lagerfläche und eine konkave Lagerfläche besitzt, die in entgegengesetzte Richtungen zeigen,
- das zweite Winkelstück mindest eine Lagerfläche (144, 146) besitzt, welche flach oder konkav ist,
- die Sicherheitsleine (80) an einem der Winkelstücke (120, 140) verankert ist.

3. Verankerungsbaugruppe gemäß Anspruch 1, bei der ein erstes der Winkelstücke (120) zwei Lagerflächen (124, 126) besitzt, welche in entgegengesetzte Richtungen zeigen, wobei eine Lagerfläche (124) flach und die andere Lagerfläche (126) konkav ist und wobei die Lagerfläche des zweiten Winkelstücks (140) flach oder konkav ist.

4. Verankerungsbaugruppe gemäß Anspruch 2, bei der eine Verstrebung (160), welche ausgestaltet ist, um an einem Teil des strukturellen Bauteils (92) abgestützt zu werden, zwischen den Winkelstücken (120, 140) angeordnet ist und ein Loch (163) umfasst, durch welches sich eine der Schrauben erstreckt, wobei die Verstrebung mittels mindestens einer, auf die eine Schraube (170) aufgeschraubten Mutter (190) an das Teil des strukturellen Bauteils (92) geklemmt ist.

5. Verankerungsbaugruppe nach einem der Ansprüche 1 bis 4, bei der das zweite Winkelstück (140) eine flache Lagerfläche (144) und eine konkave Lagerfläche (146) besitzt, und bei der die flache Lagerfläche (144) und die konkave Lagerfläche (146) in entgegengesetzte Richtungen zeigen.

6. Verankerungsbaugruppe nach einem der Ansprüche 1 bis 5, bei der jedes Winkelstück (120, 140) einen U-förmigen Querschnitt besitzt.

7. Verankerungsbaugruppe gemäß Anspruch 6, bei der der U-förmige Querschnitt von einer Grundplatte und gegenüberliegenden Seitenplatten definiert ist, wobei die Grundplatte eine flache Lagerfläche definiert, welche von den beiden Seitenplatten weg zeigt, und die Seitenplatten äußere Enden besitzen, welche von der Grundplatte weg zeigen und eine konkave Lagerfläche definieren; und bei der die Schrauben (170), welche das erste Winkelstück (120) und das zweite Winkelstück (140) miteinander verbinden, sich senkrecht zu der Grundplatte erstrecken.

8. Verankerungsbaugruppe nach einem der Ansprüche 1 bis 7, weiter umfassend eine zweite Verstrebung (160), die eine Größe und eine Konfiguration aufweist, um am strukturellen Bauteil in der Nähe eines anderen äußeren Flanschendes abgestützt zu werden, wobei die zweite Verstrebung (170) zwischen dem ersten Winkelstück (120) und dem zweiten Winkelstück (140) angeordnet ist und wobei die zweite Verstrebung (160) mittels mindestens einer, auf die mindestens eine Schraube (170) aufgeschraubten Mutter an das strukturelle Bauteil geklemmt ist.

9. Verankerungsbaugruppe nach Anspruch 8, bei der die Verstrebungen (160) miteinander identisch sind.

10. Verankerungsbaugruppe nach einem der Ansprüche 1 und 3 bis 9, bei der die oder jede Verstrebung (160) eine L-Form besitzt und ein vergleichsweise längeres Segment umfasst, welches sich parallel zu der ersten Lagerfläche (124) auf dem ersten Winkelstück (120) erstreckt, sowie ein vergleichsweise kürzeres Segment, welches sich senkrecht zu dem vergleichsweise längeren Segment erstreckt und bei dem ein Flansch auf dem strukturellen Bauteil zwischen das vergleichsweise längere Segment und entweder das erste Winkelstück (120) oder das zweite Winkelstück (140) geklemmt ist.

11. Verankerungsbaugruppe nach einem der Ansprüche 1 bis 10, bei der in einer ersten Konfiguration das erste Winkelstück (120) und das zweite Winkelstück (140) gegenüberliegende konkave Lagerflächen definieren, die geeignet sind, um dazwischen einen kreisförmigen Querschnitt zu klemmen.

12. Verankerungsbaugruppe nach einem der Ansprüche 1 bis 11, bei der in einer zweiten Konfiguration das erste Winkelstück (120) und das zweite Winkelstück (140) gegenüberliegende flache Lagerflächen definieren, die geeignet sind, um dazwischen einen rechteckigen Querschnitt zu klemmen.

13. Verankerungsbaugruppe nach einem der Ansprüche 1 bis 12, ferner umfassend eine Beilagscheibe (180) für jede mit einem Gewinde versehene Schraube (190).

14. Verankerungsbaugruppe nach einem der Ansprüche 1 bis 13, bei dem jede der Schrauben (170) gegenüberliegende, mit Gewinde versehene Enden besitzt und die Baugruppe sechs der besagten Muttern (190) besitzt, die auf die Schrauben aufgeschraubt sind.

## Revendications

1. Un ensemble d'ancrage pour fixer un câble de sécurité (80) à un élément porteur (92), ledit ensemble comprenant deux pattes (120, 140) reliées entre elles par des boulons (170) et des écrous (190) vissés sur les boulons, chaque patte ayant une surface d'appui destinée à porter contre l'élément de support, **caractérisé en ce que** :
- l'élément de support peut avoir différentes sections transversales,
- une attache (160) destinée à porter contre une partie de l'élément de support est disposée entre les pattes (120, 140) et comprend un trou (163) à travers lequel s'étend l'un desdits boulons (170),
- l'attache (160) est serrée sur ladite partie de l'élément de support (92) par au moins un écrou (190) vissé sur ledit boulon (170),
- ledit câble de sécurité (80) est fixé à l'une des pattes.

2. L'ensemble d'ancrage pour la fixation d'un câble de sécurité (80) à un élément de support (92), ledit ensemble comprenant deux pattes (120, 140) reliées entre elles par des boulons (170) avec des écrous (190) vissés sur les boulons, chaque patte comprenant une surface d'appui destinée à porter contre l'élément de support, **caractérisé en ce que** :
- l'élément de support (92) peut avoir diverses sections transversales,
- une première desdites pattes comprend une surface d'appui plate et une surface d'appui concave qui sont orientées dans des directions opposées,
- la second patte comprend au moins une surface d'appui (144, 146) qui est plate ou concave,
- ledit câble de sécurité (80) est fixé à l'une des pattes (120, 140).

3. L'ensemble d'ancrage de la revendication 1, dans laquelle une première des pattes (120) comprend deux surfaces d'appui (124, 126) qui sont tournées dans des directions opposées, une surface d'appui (124) étant plate et l'autre surface d'appui (126) étant concave, et la surface d'appui de la seconde patte (140) est plate ou concave.

4. L'ensemble d'ancrage de la revendication 2, **caractérisé en ce qu'**une attache (160) destinée à porter contre une partie de l'élément de support (92) est disposée entre les pattes (120, 140) et comprend un trou (163) à travers lequel s'étend l'un desdits boulons, l'attache étant serrée sur ladite partie de l'élément de support (92) par au moins un écrou (190) vissé sur ledit boulon (170).

5. L'ensemble d'ancrage de l'une quelconque des revendications 1 à 4, dans lequel ladite seconde patte (140) comprend une surface d'appui plate (144) et une surface d'appui concave (146), et ladite surface d'appui plate (144) et ladite surface d'appui concave (146) sont tournées dans des directions opposées.

6. L'ensemble d'ancrage de l'une quelconque des revendications 1 à 5, dans lequel chaque patte précitée (120, 140) a une section transversale en forme de U.

7. L'ensemble d'ancrage de la revendication 6, dans lequel ladite section transversale en forme de U est définie par une plaque de base et par des plaques latérales opposées, ladite plaque de base définissant une surface d'appui plate qui est tournée à l'opposé desdites plaques latérales, et lesdites plaques latérales ont des bords distants qui sont tournées à l'opposé de ladite plaque de base et qui définissent une surface d'appui concave, et dans laquelle lesdits boulons (170) reliant entre elles ladite première patte (120) et ladite seconde patte (140) s'étendent perpendiculairement à ladite patte de base.

8. L'ensemble d'ancrage de l'une quelconque des revendications 1 à 7, comprenant de plus une seconde attache (160) dimensionnée et configurée pour porter contre l'élément de support au voisinage d'une autre extrémité de bord distant, dans laquelle ladite seconde attache (160) est disposée entre ladite première patte (120) et ladite seconde patte (140), et ladite seconde attache (160) est serrée sur ledit élément de support par au moins un écrou (190) vissé sur au moins un desdits boulons (170).

9. L'ensemble d'ancrage de la revendication 8, dans lequel lesdites attaches (160) sont identiques l'une à l'autre.

10. L'ensemble d'ancrage de l'une quelconque des revendications 1 et 3 à 9, dans lequel ladite attache ou chaque attache (160) a une forme en L et comprend un côté relativement long qui s'étend parallèlement à ladite première surface d'appui (124) de ladite première patte (120), et un côté relativement court qui s'étend perpendiculairement au côté relativement long, et un rebord de l'élément de support est serré entre ledit côté relativement long et l'une desdites première patte (120) et seconde patte (140).

11. L'ensemble d'ancrage de l'une quelconque des revendications 1 à 10, dans lequel, dans une première configuration, ladite première patte (120) et ladite seconde patte (140) définissent des surfaces d'appui concaves opposées destinées à serrer entre elles une section transversale circulaire.

12. L'ensemble d'ancrage de l'une quelconque des revendications 1 à 11, dans lequel, dans une seconde configuration, ladite première patte (120) et ladite seconde patte (140) définissent des surfaces d'appui opposées destinées à serrer entre elles une section transversale rectangulaire.

13. L'ensemble d'ancrage de l'une quelconque des revendications 1 à 12, comprenant de plus une rondelle (180) pour chaque écrou vissé précité (190).

14. L'ensemble d'ancrage de l'une quelconque des revendications 1 à 13, dans lequel chaque boulon précité (170) a des extrémités opposées filetées et ledit ensemble comprend six écrous précités (190), vissés sur lesdits boulons.
